# EUROPÄISCHE PATENTANMELDUNG

(11) **EP 2 826 796 A1**
(43) Veröffentlichungstag der Anmeldung: **21.01.2015**
(21) Anmeldenummer: 13177037.2
(22) Anmeldetag: 18.07.2013
(51) Int. Cl.: C08G 59/18, C04B 24/12, C04B 26/14

(54) **Verwendung einer Mehrkomponenten-Mörtelmasse auf Epoxid-Amin-Basis**

(71) Anmelder: HILTI Aktiengesellschaft, 9494 Schaan (LI)
(72) Erfinder: Kloninger, Christian, 82234 Wessling (DE); Duréault, Alex, 68220 Leymen (FR); Jewitt, Stephen, 4052 Basel (CH)
(74) Vertreter: Hilti Aktiengesellschaft Corporate Intellectual Property

(57) **Zusammenfassung**

Es wird die Verwendung einer Härterzusammensetzung für Mehrkomponenten-Mörtelmassen auf Epoxid-Amin-Basis, insbesondere die Verwendung einer diese enthaltende Mehrkomponenten-Mörtelmasse auf Epoxid-Amin-Basis zur chemischen Befestigung beschrieben. Die Mehrkomponenten-Mörtelmasse enthält (A) eine Harzkomponente, die als härtbare Verbindung mindestens ein Epoxidharz und gegebenenfalls mindestens einen Reaktivverdünner umfasst, und (B) eine Härterkomponente, die einen Hybridhärter umfasst, wobei die Harzkomponente (A) und/oder die Härterkomponente (B) gegebenenfalls weitere Bestandteile ausgewählt unter anorganischen und/oder organischen Verbindungen umfasst. Der Hybridhärter ist ein Gemisch aus (a) mindestens einem Amin, ausgewählt unter aliphatischen, alicyclischen oder aromatischen Aminen, als Härter, und (b) einem Novolakharz als Beschleuniger, wobei das Novolakharz in einer Menge von 30 bis 45 Gew.-%, bezogen auf das Gesamtgewicht des Hybridhärters, enthalten ist. Die Verwendung des Hybridhärters führt zu einer schnellen Aushärtung der Mehrkomponenten-Mörtelmasse auch bei tiefen Temperaturen, bei einer vollständigen Durchhärtung der Mörtelmasse. Hierdurch werden sowohl bei tiefen Temperaturen (+5°C) als auch bei hohen Temperaturen (+50°C) hohe Lastwerte der ausgehärteten Mörtelmasse und eine verbesserte Kriechbeständigkeit bei hohen Temperaturen (+50°C) erreicht. Zudem kann auf den Einsatz von freien Phenolen ganz verzichtet werden kann.

## Beschreibung

Die vorliegende Erfindung betrifft die Verwendung eines Hybridhärters als Härter in Mehrkomponenten-Mörtelmassen auf Epoxid-Amin-Basis und die Verwendung einer unter Verwendung des Hybridhärters hergestellte Mehrkomponenten-Mörtelmasse auf Epoxid-Amin-Basis für Bauzwecke, ausgenommen Beschichtungen.

Organische, härtbare Zweikomponenten-Mörtelmassen auf der Grundlage von härtbaren Epoxidharzen und Aminhärtern sind seit langem bekannt und werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verschiedenen Untergrunds verwendet. Bei der Anwendung solcher chemischer Dübel insbesondere auf Baustellen im Freien ergeben sich Schwierigkeiten, weil die Mörtelmasse einerseits auch bei tiefen Temperaturen gut handhabbar sein muss und andererseits bei erhöhten Temperaturen ein geringes Kriechen zeigen soll, gleichzeitig aber eine lange Verarbeitungsdauer besitzen und im einem breiten Temperaturbereich schnell und vollständig aushärten muss unter Erzielung hoher Lastwerte auch bei feuchten Bohrlöchern und tiefen Temperaturen sowie einer guten Wärmeformbeständigkeit der ausgehärteten Masse. Diese zum Teil widersprüchlichen Eigenschaftsprofile sind nicht ohne weiteres zu erfüllen. So ist es bei herkömmlichen Mörtelmassen üblich, zur Erzielung einer guten Handhabbarkeit bei tiefen Temperaturen einen hohen Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Durchhärtungsdauer entgegensteht.

Speziell Mörtelmassen auf Epoxid-Amin-Basis weisen eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen.

In den letzten Jahren war daher eine große Herausforderung, die Aushärteeigenschaften der Epoxid-Amin-Systeme zu verbessern, insbesondere die Härtung zu beschleunigen, ohne die überlegene Leistungsfähigkeit der Epoxid-Amin-Systeme einzubüßen.

Ein erfolgversprechender Ansatz ging dahin, Mannichbasen als Härter einzusetzen, die die Härterkomponente, das Amin, und die Beschleunigerkomponente, das Phenol, in einem Molekül vereinen. Hierdurch konnte erreicht werden, dass die Mörtelmassen auch bei tiefen Temperaturen zufriedenstellend aushärten und nach der Aushärtung ausreichende Lastwerte liefern. Die EP 1 475 412 A2 beispielsweise beschreibt für das Verkleben von großen Bauteilen oder bei Außenanwendungen im Hoch- und Tiefbau einen Anwendungsbereich von +5°C bis +60°C und eine Glasübergangstemperatur von +80°C. Aus der DE 198 32 669 A1 ist eine Zweikomponenten-Mörtelmasse bekannt, die auch bei Temperaturen von unter 0°C eine erhöhte Härtungsgeschwindigkeit bei gleichzeitig verbesserter Durchhärtung und eine Verbesserung des Fließverhaltens zeigt. Eine Mehrkomponenten-Mörtelmasse mit deutlich erhöhter Verbundspannung nach dem Aushärten auch bei höheren Temperaturen, wie bei +80°C, und mit einer zufriedenstellenden Aushärtung bei -5°C ist in der DE 10 2004 008 464 A1 beschrieben.

Es hat sich gezeigt, dass trotz der im Vergleich zu anderen Aminhärtern schnellen Reaktion, die Mannichbasen mit Epoxidharzen eingehen, ihr Einsatz in Bereich der chemischen Befestigungstechnik limitiert ist. So beobachtet man nicht selten bei niedrigen Temperaturen (<10°C) ein "Einfrieren" der Reaktion ab einer gewissen Umsatzgrenze. Jenseits dieser Umsatzgrenze wird die Aushärtung diffusionskontrolliert und findet nur noch sehr langsam oder überhaupt nicht mehr statt. Dies hat zur Folge, dass typische Aushärtezeiten von solchen Systemen bei +5°C im Bereich von mindestens 72 Stunden liegen. Durch die unvollständige Reaktion bei tiefen Temperaturen, d.h. die Masse härtet nicht vollständig aus, wird außerdem der technische Einsatzbereich des chemischen Dübels eingegrenzt, da die zuverlässigen Lasten reduziert werden müssen oder eine hohe Last erst bei langer Aushärtedauer erreicht werden kann.

Ein weiterer Nachteil bekannter Mehrkomponenten-Mörtelmassen auf Epoxid-Amin-Basis liegt im Einsatz von oft erheblichen Mengen an ätzenden Aminen als Härter, wie m-Xylylendiamin (mXDA), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in zahlreichen Ländern Grenzwerte eingeführt, bis zu welchem Gehalt beispielsweise an mXDA oder Bisphenol A die Produkte gekennzeichnet werden müssen, bzw. überhaupt noch in Produkten enthalten sein dürfen.

Bei Beschichtungssystemen auf Epoxid-Basis hat sich gezeigt, dass es durch Zugabe eines Novolakharzes als Beschleuniger bzw. durch Verwendung eines Hybridhärters auf der Basis eines Gemisches aus Aminen und Novolakharzen möglich ist, die Aushärtegeschwindigkeit von Epoxidharz-Zusammensetzungen bei tiefen Temperaturen, d.h. im Bereich nahe 0°C deutlich zu erhöhen, wie es in WO 99/29757 (Beschleuniger auf Novolak-Basis) und EP 1 674 495 A1 (Hybridhärter) für Schutzbeschichtungen für metallische und mineralische Substrate beschrieben ist. Eine Anwendung dieser Hybridhärter insbesondere im Bereich der chemischen Befestigungstechnik, z.B. zur chemischen Verankerung von Befestigungselementen, wie Ankerstangen, Bewehrungseisen und dergleichen, insbesondere bei Zweikomponenten-Injektionssystemen, ist jedoch noch nicht bekannt.

Die Aufgabe der Erfindung besteht darin, eine Mehrkomponenten-Mörtelmasse bereitzustellen, bei der der Anteil an kennzeichnungspflichtigen Verbindungen soweit wie möglich reduziert ist, ohne auf die vorteilhaften Eigenschaften der kennzeichnungspflichtigen Verbindungen verzichten zu müssen.

Eine weitere Aufgabe der vorliegenden Erfindung besteht darin, die erfolgreich bei Beschichtungen angewandten Hybridhärter für weitere Bauzwecke, insbesondere die chemische Befestigungstechnik nutzbar zu machen.

Es wurde überraschend gefunden, dass die Verwendung eines Hybridhärters, der eine Mischung aus Aminen und einem Novolakharz ist, als Härter in Mehrkomponenten-Mörtelmassen zu deutlich verbesserten Eigenschaften der Mörtelmasse führt und darüber hinaus einen deutlich geringeren Anteil an kennzeichnungspflichtigen Verbindungen, wie z.B. freies Phenol bzw. dessen Derivate, wie Bisphenol A, und mXDA, erlaubt.

Gegenüber den bisher eingesetzten Härtern auf Basis von Mannichbasen-Formulierungen führt die Verwendung des Hybridhärters zu einer schnellen Aushärtung von Mehrkomponenten-Mörtelmassen auf Epoxid-Amin-Basis auch bei tiefen Temperaturen (+5°C), bei einer vollständigen Durchhärtung der Mörtelmasse. Hierdurch werden sowohl bei tiefen Temperaturen als auch bei hohen Temperaturen (+50°C) hohe Lastwerte der ausgehärteten Mörtelmasse und eine verbesserte Kriechbeständigkeit bei hohen Temperaturen (+50°C) erreicht, was auf die vollständige Durchhärtung der Mörtelmasse zurückzuführen ist. Überraschend war die relativ schnelle Durchhärtung der durch die erfindungsgemäße Verwendung des Novolak-Amin Hybridhärters erhältliche Mörtelmasse, verglichen mit bekannten Mörtelmassen mit einer Mannichbase als Härter.

Ein weiterer Vorteil der Erfindung liegt darin, dass auf den Einsatz von freien Phenolen, welche üblicherweise den Mannichbasen-gehärteten Systemen als Beschleuniger zugegeben werden, ganz verzichtet werden kann, wodurch die Mehrkomponenten-Mörtelmasse weniger gesundheitsgefährdende Inhaltsstoffe aufweist.

Wie eingangs erwähnt, sind Mehrkomponenten-Mörtelmassen komplexe Systeme, wobei es nicht möglich ist, den Einfluss der anorganischen Zuschlagstoffe sowie die Eigenschaften, wie Aushärtung, Durchhärtung, Haftung auf unterschiedlichen Untergründung und Umgebungsbedingungen, Lastwerte, Kriechfestigkeit und dergleichen, vorherzusagen. Die mit dem in DE 197 54 393.6 A1 beschriebenen Beschleuniger und EP 04 106 911 A1 beschriebenen Hybridhärter erzielbare Wirkung war nicht vorhersehbar, da der Einfluss des Hybridhärters auf die für Bauzwecke, insbesondere chemische Befestigungszwecke erforderlichen hohen Anforderungen an die Eigenschaften der Mörtelmasse sowohl im ungehärteten wie auch im ausgehärteten Zustand weder bekannt noch empirisch berechenbar sind. Zudem werden an die Eigenschaften von Beschichtungssystemen andere Anforderungen gestellt als an Mörtelmassen für Bauzwecke, insbesondere die chemische Verankerung von Befestigungselementen in Bohrlöchern. Die Ergebnisse sind daher nicht ohne weiteres auf die Systeme der vorliegenden Erfindung übertragbar.

Ein Gegenstand der Erfindung ist daher die Verwendung eines Hybridhärters als Härter für Mehrkomponenten-Mörtelmassen, insbesondere Zweikomponenten-Mörtelmassen auf Epoxid-Amin-Basis. Der Hybridhärter ist ein Gemisch aus (a) mindestens einem Amin, ausgewählt unter aliphatischen, alicyclischen oder aromatischen Aminen, wobei das Amin im Mittel mindestens zwei reaktive Wasserstoffatome, gebunden an ein Stickstoffatom, pro Molekül aufweist, als Härter, und (b) mindestens einem Novolakharz der allgemeinen Formel (I): 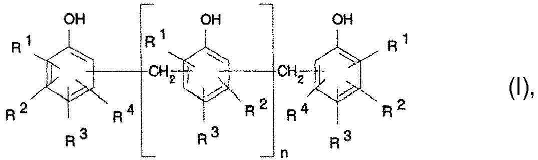 in der R¹, R², R³ und R⁴ jeweils unabhängig voneinander Wasserstoff oder ein unverzweigtes oder verzweigtes C₁-C₁₅-Alkylradikal sind und n 1 bis 12 ist, als Beschleuniger.

Bevorzugte Novolakharze sind solche, bei denen in Formel (I) R¹, R², R³ und R⁴ entweder Wasserstoff sind, oder eines oder zwei der Radikale R¹ bis R⁴ das Radikal-CH₃ ist/sind, oder eines der Radikale R¹ bis R⁴ das *tert*-Butylradikal oder ein unverzweigtes oder verzweigtes C₁-C₁₅-Alkylradikal ist.

In diesem Zusammenhang wird Bezug genommen auf die Anmeldung WO 99/29757 A1, deren Inhalt hiermit in diese Anmeldung aufgenommen wird.

Das Novolakharz wird erfindungsgemäß in einer Menge von 10 bis 45 Gew.-%, bevorzugt 20 bis 45 Gew.-%, stärker bevorzugt 30 bis 45 Gew.-% und am stärksten bevorzugt 30 bis 40 Gew.-%, bezogen auf den Hybridhärter, eingesetzt. Die Menge sollte 45 Gew.-% nicht übersteigen, um bei Raumtemperatur eine flüssige Härterzusammensetzung zu erhalten, die auch bei tiefen Temperaturen hinreichend niedrigviskos ist, um die Auspresseigenschaften der Härterkomponenten der Mörtelmasse nicht negativ zu beeinflussen. Bei einer Menge von weniger als 10 Gew.-% sinkt der Beschleunigungseffekt soweit ab, dass eine Beschleunigung kaum mehr beobachtet wird und der positive Effekt des Hybridhärters auf die Beschleunigung der Härtungsreaktion bei Temperaturen unter +10°C nicht mehr zum Tragen kommt.

Da die phenolischen Gruppen in dem erfindungsgemäß verwendeten Novolakharz in hochmolekularer Form vorliegen, kann völlig auf die Verwendung von freien Phenolen verzichtet werden, ohne auf die Wirkung(en) der Phenole, wie die Beschleunigung der Aushärtung von Epoxid-Verbindungen mit Aminen, verzichten zu müssen.

Als Härter sind die für Epoxid-Amin-Systeme üblichen und dem Fachmann bekannten Amine, ausgewählt unter aliphatischen, alicyclischen und aromatischen Aminen, geeignet, wobei das Amin im Mittel mindestens zwei reaktive Wasserstoffatome, gebunden an ein Stickstoffatom, pro Molekül aufweisen. Hierunter fallen auch Polyamine mit mindestens zwei Aminogruppen im Molekül.

Im Sinne der Erfindung bedeutet: *"aliphatische Verbindungen"* acyclische oder cyclische, gesättigte oder ungesättigten Kohlenstoffverbindungen, ausgenommen aromatische Verbindungen; *"alicyclische Verbindungen"* Verbindungen mit einer carbocyclischen Ringstruktur, ausgenommen Benzolderivate oder andere aromatische Systeme; und *"aromatische Verbindungen"* Verbindungen, die der Hückel (4n+2)-Regel folgen; und *"Amine"* Verbindungen, die durch Austausch von einem, zwei oder drei Wasserstoffatomen durch Kohlenwasserstoffgruppen aus Ammoniak abgeleitet sind und die allgemeinen Strukturen RNH₂ (primäre Amine), R₂NH (sekundäre Amine) und R₃N (tertiäre Amine) haben (IUPAC. Compendium of Chemical Terminology, 2nd ed. (the "Gold Book"). Compiled by A. D. McNaught and A. Wilkinson. Blackwell Scientific Publications, Oxford (1997)).

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Erfindungsgemäß bevorzugt sind Polyamine, wie 2-Methylpentandiamin (DYTEK A@), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(amino-methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

In diesem Zusammenhang wird Bezug genommen auf die Anmeldung EP 1 674 495 A1, deren Inhalt hiermit in diese Anmeldung aufgenommen wird.

Das Amin kann entweder alleine oder als Gemisch aus zweien oder mehreren davon eingesetzt werden, wobei ein Gemisch aus zweien oder mehreren davon bevorzugt ist. Dies ermöglicht, unter anderem auf den Einsatz von toxischem 1,3-Benzoldimethanamin weitestgehend zu verzichten, bzw. dessen Verwendung stark einzuschränken, ohne auf dessen vorteilhafte Eigenschaften im Hinblick auf Reaktivität und Viskositätsverhalten zu verzichten.

Als vorteilhaft hat sich ein Amin-Gemisch erwiesen, was die gleichzeitige Kontrolle über Härtungsgeschwindigkeit, Lastwerte auf verschiedenen Betonuntergründen, Wärmeformbeständigkeit und Viskosität der Härtermischung anbelangt. Die Viskosität hat einen unmittelbaren Einfluss auf die Auspresskräfte der Mörtelmasse. Das Gemisch setzt sich erfindungsgemäß aus zweien oder mehreren Aminen, ausgewählt unter unverzweigten oder verzweigten C₂-C₁₀-Alkyldiaminen, C₂-C₁₀-Polyalkylen-Polyaminen und aromatischen Aminen, welche bevorzugt einen substituierten oder unsubstituierten Benzolring enthalten, zusammen.

Die Alkyldiamine sind bevorzugt unter 2,2,4- oder 2,4,4-Trimethyl-1,6-diaminohexan und Gemische davon (TMD), 1-Amino-3-aminomethyl-3,5,5-trimethylcyclohexan (IPDA), 1,3-Bis(aminomethyl)-cyclohexan (1,3-BAC), 1,4-Bis(aminomethyl)-cyclohexan (1,4 -BAC), 2-Methyl-1,5-pentandiamin (DYTEK A), (3(4),8(9)Bis(aminomethyl)dicyclo[5.2.1.0^{2,6}]decan und Isomerengemische davon (TCD-Diamin), Aminomethyltricyclo[5.2.1.0^{2,6}]decan und Isomerengemische davon (TCD-Amin) und 1,6-Hexamethylendiamin ausgewählt.

Die Poylalkylen-Polyamine sind bevorzugt unter Diethylentriamin (DETA), Triethylentetramin (TETA), Tetraethylenpentamin (TEPA) und Pentaethylenhexamin (PEHA) ausgewählt.

Die aromatischen Amine sind bevorzugt unter 1,3-Benzoldimethanamin (mXDA) und 1,4-Benzoldimethanamin (pXDA) und N,N'-Dimethyl-1,3-benzoldimethanamin ausgewählt.

Das Gemisch kann aus jeweils zwei oder mehreren Aminen, ausgewählt aus derselben Gruppe oder aus unterschiedlichen Gruppen, bestehen. Ein Gemisch aus zwei Aminen kann somit aus zwei aliphatischen Aminen, zwei alicyclischen Aminen oder zwei aromatischen Aminen zusammengesetzt sein. Bevorzugte Amin-Gemische sind Gemische aus den unterschiedlichen Aminogruppen, z.B. Gemische aus mindestens einem Dialkyldiamin und mindestens einem aromatischen Amin oder mindestens einem Polyalkyl-Polyamin oder Gemische aus mindestens einem Polyalkyl-Polyamin und mindestens einem aromatischen Amin oder Gemische aus mindestens einem Dialkyldiamin, mindestens einem Polyalkyl-Polyamin und mindestens einem aromatischen Amin.

Ein besonders bevorzugtes Gemisch aus zwei Aminen ist ein Gemisch aus 2-Methyl-1,5-pentandiamin und 1,3-Benzoldimethanamin, wobei ganz besonders bevorzugt ein Gemisch aus 28 bis 34 Gew.-% 2-Methyl-1,5-pentandiamin und 4 bis 7 Gew.-% 1,3-Benzoldimethanamin, jeweils bezogen auf den Hybridhärter, ist.

Ein alternatives, besonders bevorzugtes Gemisch aus vier Aminen ist ein Gemisch aus Trimethylhexamethylendiamin (TMD), 2-Methylpentandiamin (DYTEK A), Triethylentetramin (TETA) und 1,3-Benzoldimethanamin (mXDA), wobei ganz besonders bevorzugt ein Gemisch aus 20 bis 28 Gew.-% Trimethylhexamethylendiamin (TMD), 20 bis 28 Gew.-% 2-Methyl-pentandiamin (DYTEK A), 10 bis 18 Gew.-% Triethylentetramin (TETA) und 4 bis 10 Gew.-% 1,3-Benzoldimethanamin (mXDA), jeweils bezogen auf den Hybridhärter, ist.

Durch diese Gemische kann der Gehalt an toxischem 1,3-Benzoldimethanamin (mXDA) möglichst gering (< 10 Gew.-%) gehalten werden und zudem können durch entsprechende Kombinationen die Härtungsgeschwindigkeit, die Lastwerte auf verschiedenen Betonuntergründen, die Wärmeformbeständigkeit und die Gesamtviskosität eingestellt werden.

In einer besonders bevorzugten Ausführungsform der Erfindung enthält der Hybridhärter ferner ein Aminophenol oder einen Ether davon, der mindestens eine tertiäre Aminogruppe gegebenenfalls zusammen mit einer primären und/oder sekundären Aminogruppe aufweist, als Co-Beschleuniger. Der Co-Beschleuniger ist unter Verbindungen der allgemeinen Formel (II) ausgewählt, 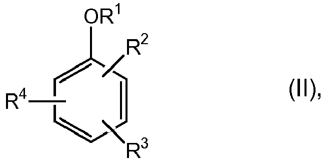 in der R¹ Wasserstoff oder ein unverzweigtes oder verzweigtes C₁-C₁₅-Alkylradikal ist, R² ein (CH₂)ₙNR⁵R⁶-Radikal oder ein NH(CH₂)ₙNR⁵R⁶-Radikal ist, in dem R⁵ und R⁶ unabhängig voneinander ein unverzweigtes oder verzweigtes C₁-C₁₅-Alkylradikal sind und n 0 oder 1 ist, R³ und R⁴ unabhängig voneinander Wasserstoff oder ein (CH₂)ₙNR⁷R⁸-Radikal oder ein NH(CH₂)ₙNR⁷R⁸-Radikal sind, R⁷ und R⁸ unabhängig voneinander Wasserstoff oder ein unverzweigtes oder verzweigtes C₁-C₁₅-Alkylradikal sind und n 0 oder 1 ist.

R¹ ist bevorzugt Wasserstoff oder ein C₁-C₁₅-Alkylradikal, insbesondere ein unverzweigtes C₁-C₁₅-Alkylradikal, stärker bevorzugt Methyl oder Ethyl und am stärksten bevorzugt Methyl.

Bevorzugt ist das Phenol der Formel (II) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylradikale sind, sind diese bevorzugt ein C₁-C₅-Alkylradikal, stärker bevorzugt ein Methyl- oder Ethylradikal und am stärksten bevorzugt das Methylradikal.

Als Co-Beschleuniger kann entweder eine Verbindung oder ein Gemisch von mindestens zwei Verbindungen der Formel (II) eingesetzt werden.

Bevorzugt ist der Co-Beschleuniger unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Co-Beschleuniger 2,4,6-Tris(dimethylaminomethyl)phenol.

Ein erfindungsgemäß bevorzugtes Co-Beschleunigergemisch enthält 2,4,6-Tris(dimethlaminomethyl)phenol und Bis(dimethylaminomethyl)phenol. Solche Gemische sind z.B. kommerziell erhältlich als Ancamine® K54 (AirProducts, Belgien).

Das tertiäre Amin wird erfindungsgemäß in einer Menge von 0,5 bis 10 Gew.-%, bezogen auf den Hybridhärter, eingesetzt.

Das Verhältnis von Amin bzw. Amingemisch zu dem Novolakharz beträgt erfindungsgemäß 70:30 bis 55:45, wobei der Anteil an Novolakharz und Amin bzw. dem Amingemisch so gewählt werden muss, dass der Hybridhärter flüssig bleibt. Zum Beispiel ist für das Amingemisch Trimethylhexamethylendiamin und 1,3-Benzoldimethanamin das beste Verhältnis von Amin zu Novolakharz 60:40.

Ein weiterer Gegenstand der Erfindung ist die Verwendung einer Mehrkomponenten-Mörtelmasse, insbesondere Zweikomponenten-Mörtelmasse mit (A) einer Harzkomponente, die als härtbare Verbindung mindestens ein Epoxidharz, das im Durchschnitt mehr als eine Epoxid-Gruppe pro Molekül enthält, und gegebenenfalls mindestens einen Reaktivverdünner umfasst; und (B) einer Härterkomponente, die einen Hybridhärter umfasst, wobei die Harzkomponente (A) und/oder die Härterkomponente (B) gegebenenfalls weitere Bestandteile ausgewählt unter anorganischen und/oder organischen Verbindungen umfasst, für Bauzwecke, ausgenommen Beschichtungen.

Der Hybridhärter enthält erfindungsgemäß ein Gemisch aus (a) mindestens einem Amin, ausgewählt unter aliphatischen, alicyclischen oder aromatischen Aminen, wobei das Amin im Mittel mindestens zwei reaktive Wasserstoffatome, gebunden an ein Stickstoffatom, pro Molekül aufweist, als Härter, und (b) einem Novolakharz der allgemeinen Formel (I): 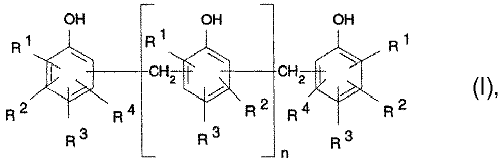 in der R¹, R², R³ und R⁴ jeweils unabhängig voneinander Wasserstoff oder ein unverzweigtes oder verzweigtes C₁-C₁₅-Alkylradikal sind und n 1 bis 12 ist, wobei das Novolakharz in einer Menge von 30 bis 45 Gew.-%, bezogen auf das Gesamtgewicht des Hybridhärters, als Beschleuniger.

Im Sinne der vorliegenden Erfindung umfasst der Begriff *"für Bauzwecke"* das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

In einer bevorzugten Ausführungsform der Erfindung enthält die Mehrkomponenten-Mörtelmasse, insbesondere Zweikomponenten-Mörtelmasse ferner (c) mindestens eine Verbindung der allgemeinen Formel (II): 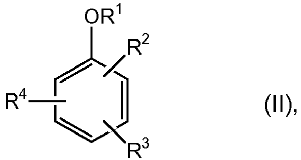 in der R¹ Wasserstoff oder ein unverzweigtes oder verzweigtes C₁-C₁₅-Alkylradikal ist, R² ein (CH₂)ₙNR⁵R⁶-Radikal oder ein NH(CH₂)ₙNR⁵R⁶-Radikal ist, in dem R⁵ und R⁶ unabhängig voneinander ein unverzweigtes oder verzweigtes C₁-C₁₅-Alkylradikal sind und n 0 oder 1 ist, R³ und R⁴ unabhängig voneinander Wasserstoff oder ein (CH₂)ₙNR⁷R⁸-Radikal oder ein NH(CH₂)ₙNR⁷R⁸-Radikal sind, R⁷ und R⁸ unabhängig voneinander Wasserstoff oder ein unverzweigtes oder verzweigtes C₁-C₁₅-Alkylradikal sind und n 0 oder 1 ist, als Co-Beschleuniger. Damit kann die Glasumwandlungstemperatur des ausgehärteten Harzes erhöht werden, was sich positiv auf die Verwendbarkeit der ausgehärteten Mörtelmasse bei hohen Temperaturen auswirkt, da die erreichbaren Lastwerte weiter erhöht werden können.

Bezüglich des Hybridhärters und des Co-Beschleunigers wird auf die obigen Ausführungen verwiesen.

Der Härter wird erfindungsgemäß in einer Menge von 54 bis 84 Gew.-%, bezogen auf die Härterkomponente, eingesetzt.

Als härtbare Epoxide kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxid-Verbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet, Geeignete Polyepoxid-Verbindungen sind z.B. in Lee, Neville, Handbook of Epoxy Resins 1967, beschrieben. Vorzugsweise handelt es sich bei den Epoxiden um Glycidylether, die sich von mehrwertigen Alkoholen, insbesondere Bisphenolen und Novolaken ableiten. Die Epoxidharze haben ein Epoxyäquivalentgewicht von 120 bis 2000 g/EQ, vorzugsweise von 140 bis 400. Es können auch Mischungen von mehreren Epoxidharzen verwendet werden. Besonders bevorzugt werden flüssige Diglycidylether auf Basis von Bisphenol A und/oder F mit einem Epoxyäquivalentgewicht von 180 bis 190 g/EQ. Es können auch Mischungen mehrerer Epoxidharze verwendet werden.

Als mehrwertige Phenole sind beispielsweise zu nennen: Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan, 4,4'-Dihydroxy-3,3'-dimethyldiphenylpropan und dergleichen.

Bevorzugt ist das Epoxid ein Diglycidylether von Bisphenol A oder von Bisphenol F oder einem Gemisch davon.

Der Anteil an Epoxidharz beträgt >0 bis 100 Gew.-%, bevorzugt 10 bis 70 Gew.-% und besonders bevorzugt 30 bis 60 Gew.-%, bezogen auf die Harzkomponente (A).

Neben den Epoxidharzen kann die Mehrkomponenten-Mörtelmasse mindestens einen Reaktivverdünner enthalten. Bei einem Mehrkomponentensystem sollte der Reaktivverdünner nicht in der Härterkomponente vorliegen, sondern vorzugsweise nur in der Harzkomponente (A). Als Reaktivverdünner finden Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxoid-Funktionalität von mindestens 2, wie 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE), oder ferner Mischungen von zwei oder mehr dieser Reaktivverdünner Verwendung, vorzugsweise Triglycidylether, besonders bevorzugt als Gemisch aus 1,4-Butandioldiglycidylether (BDDGE) und Trimethylolpropantriglycidylether (TMPTGE). Die Reaktivverdünner liegen in einer Menge von 0 bis 60 Gew.-%, insbesondere von 1 bis 20 Gew.-%, bezogen auf die Harzkomponente (A), vor.

In einer Ausführungsform kann die Mehrkomponenten-Mörtelmasse zusätzlich einen Haftvermittler enthalten. Durch den Einsatz eines Haftvermittlers wird die Vernetzung der Bohrlochwand mit der Mörtelmasse verbessert, so dass sich die Haftung im ausgehärteten Zustand erhöht. Dies ist für die Verwendung der Zweikomponenten-Mörtelmasse z.B. in Diamant-gebohrten Bohrlöchern von Bedeutung und erhöht die Lastwerte. Geeignete Haftvermittler sind aus der Gruppe der Silane, die mit weiteren reaktiven organischen Gruppen funktionalisiert sind, ausgewählt, wie 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan, wobei 3-Aminopropyltriethoxysilan bevorzugt ist.

In diesem Zusammenhang wird Bezug genommen auf die WO 2011/113533 A1, deren Inhalt hiermit in diese Anmeldung aufgenommen wird.

Der Haftvermittler kann in einer Menge bis zu 10 Gew.-%, bevorzugt 0,1 bis 5 Gew.-%, bezogen auf die Harzkomponente, enthalten sein.

Die Harzkomponente (A) und/oder die Härterkomponente (B) kann zusätzlich die üblicherweise verwendeten anorganische Zuschlagstoffe enthalten, wie Füllstoffe und/oder weitere anorganische Zusätze.

Als Füllstoffe finden übliche Füllstoffe und/oder Verstärkungsmittel, vorzugsweise mineralische oder mineralähnliche Füllstoffe, Verwendung, wie Siliziumdioxid, insbesondere pyrogenes Siliziumdioxid, Quarzsand und/oder Quarzmehl, Glaskügelchen, Glashohlkügelchen, Glimmer, Zement, Calciumcarbonat und/oder Calciumsulfat, Korund, Carbide, Metallteilchen, Schwerspat, synthetische und/oder natürliche Fasern etc..

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, ebenso wie Phlegmatisiermittel, Dispergiermittel, weitere Steuerungsmittel für die Reaktionsgeschwindigkeit, Netzmittel und dergleichen oder dergleichen, oder Gemische von zwei oder mehreren davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine.

In dieser Hinsicht wird Bezug genommen auf die Anmeldungen WO 02/079341 A1 und WO 02/079293 A1, deren Inhalt hiermit in diese Anmeldung aufgenommen wird. Der Anteil der Füllstoffe beträgt 0 bis 70 Gew.-%, vorzugsweise 5 bis 55 Gew.-%, bezogen auf die Harzkomponente (A) bzw. Härterkomponente (B).

Eine bevorzugte Zweikomponenten-Mörtelmasse enthält als Harzkomponente 10 - 70 Gew.-% Epoxidharz, 1 - 20 Gew.-% Reaktivverdünner, 1 - 75 Gew.-% anorganische Füllstoffe, wobei die Mengen jeweils auf die Harzkomponente bezogen sind, und reaktionsinhibierend getrennt davon als Härterkomponente 30 - 45 Gew.-% Novolakharz der Formel (I), 54 - 84 Gew.-% Härter, 0,1 - 10 Gew.-% Haftvermittler und 1 - 75 Gew.-% anorganische Füllstoffe, wobei die Mengen jeweils auf die Härterkomponente bezogen sind. Eine besonders bevorzugte Zweikomponenten-Mörtelmasse enthält als Harzkomponente Gew.-% eines Gemisches aus Bisglycidylethern als Epoxidharz, Gew.-% eines Gemisches aus 1,4-Butandioldiglycidylether und Trimethylolpropan-triglycidylether als Reaktivverdünner und 22 - 55 Gew.-% Quarzmehl und pyrogene Kieselsäure als anorganische Füllstoffe, wobei die Mengen auf die Komponente A bezogen sind, und reaktionsinhibierend getrennt davon als Komponente B 22 - 28 Gew.-% Novolakharz der Formel (I), 32 - 41 Gew.-% eines Gemisches aus Dytek A und Amine, Gew.-% 2,4,6-Tris(dimethylaminomethyl)phenol als Beschleuniger, 1 - 2 Gew.-% eines Aminosilans als Haftvermittler und 20 - 55 Gew.-% eines Gemisches aus Zement und/oder Quarzmehl und hydrophobierter, pyrogener Kieselsäure. Die Summe der Komponenten der Harz- und der Härterkomponenten ergeben zusammen jeweils 100%.

Die Komponenten der Zweikomponenten-Mörtelmasse sind vorzugsweise in einer Zweikammervorrichtung enthalten. Dabei sind die Harzkomponente von der Härterkomponente getrennt konfektioniert, so dass die eine Komponente regelmäßig das härtbare Epoxidharz und gegebenenfalls den Reaktivverdünner enthält, während die andere Komponente den Aminhärter und die Beschleuniger Mischung enthält. Die Füllstoffe können in der einen oder auch in der anderen Komponente enthalten sein, ebenso wie die anderen an sich bekannten üblichen Bestandteile.

Zu den Zweikammersystemen, in denen die härtbare Zweikomponenten-Mörtelmasse vorliegt, zählen insbesondere zwei oder mehr Folienbeutel zur Trennung von härtbaren Bestandteilen und Härtern, wobei der Inhalt der Folienbeutel gemeinsam, beispielsweise über einen Statikmischer, in ein Bohrloch injiziert werden kann. Diese Patronen- und Folienbeutel-Systeme enthalten die Härterkomponente reaktionsinhibierend getrennt von der Harzkomponente. Aber auch die Konfektionierung in Mehrkammerpatronen oder -eimern oder Sets von Eimern ist möglich.

In der Mehrkomponenten-Mörtelmasse, insbesondere Zweikomponenten-Mörtelmasse beträgt das Verhältnis von Harzkomponente zu Härterkomponente 1:1 bis 5:1, bevorzugt 3:1.

Es hat sich gezeigt, dass die durch die beschriebene Mehrkomponenten-Mörtelmasse bei langer Verarbeitungsdauer und schneller Durchhärtungszeit ausgezeichnete Lastwerte erreicht werden können, und zwar sowohl bei den in der Befestigungstechnik üblichen Temperaturen von +5°C bis +50°C sowie eine hohe Wärmeformbeständigkeit aufweist.

Die Verbesserung zeigt sich vor allem in einer deutlich verbesserten Haftung auf Betonuntergründen, vor allem in Diamant-gebohrten Bohrlöchern. Zusätzlich kann durch die erfindungsgemäße Verwendung des Novolak-Amin Hybridhärters, verglichen mit den bekannten Systemen, eine wesentlich schnellere Aushärtung bei niedrigen Temperaturen erreicht werden.

Die nachfolgenden Beispiele dienen der Illustration der Erfindung, ohne ihren Umfang einzuschränken:

### AUSFÜHRUNGSBEISPIELE

### Vergleichsbeispiel V1

Ein Handelsprodukt, HIT RE 500 (Verpackungsgröße 330/1), HILTI Aktiengesellschaft, Fürstentum Liechtenstein, auf der Basis einer Zubereitung aus Epoxidharzen und einer Mannichbasen-Formulierung als Härter und mineralischen Füllstoffen (Artikel-Nr. 00305074, HILTI Deutschland GmbH, Kaufering, Deutschland) wird verglichen mit dem gleichen Produkt, bei dem der Mannichbasen-Härter durch einen Hybridhärter ersetzt wurde.

### Beispiele 1 bis 4

Entsprechend der Zusammensetzung der nachfolgend genannten Komponenten werden durch Mischen der Harz- und Härterkomponente in einem Volumenverhältnis von 3:1 mittels eines Statikmischers (HILTI MD 2500) Mörtelmischungen hergestellt:

### Harzkomponente (A)

| | | |
|---|---|---|
| Reaktivverdünntes Epoxidharz ¹⁾: | | 61 % |
| | - Bisphenol A Basisharz | |
| | - Bisphenol F Basisharz | |
| | - Trimethylolpropantriglycidylether | |
| | - 1,4-Hexandioldiglycidylether | |
| anorganischer Füllstoff: | | 38 % |
| | - Quarzmehl ²⁾ | |
| hydrophobierte pyrogene Kieselsäure | | 3% |

| | | |
|---|---|---|
| ¹⁾ Gesamtviskosität: 500 bis 1200 mPas bei 23°C; Epoxidäquivalentgewicht 160-180 g/val ²⁾ mittlere Korngröße: 16 µm | | |

### Härterkomponente (B)

| | | |
|---|---|---|
| Härter: | | 62 Gew.-% |
| | - Amin/Novolakharz-Gemisch ³⁾ | |
| anorganischer Füllstoff: | | |
| | - Zement ⁴⁾ | 14 Gew.-% |
| | - Quarzmehl ⁵⁾ | 20 Gew.-% |
| hydrophobierte pyrogene Kieselsäure | | 4 Gew.-% |

| | | |
|---|---|---|
| ³⁾ Viskosität bei 23°C: 150-300 mPa·s; Aminzahl: 500 - 650 mg KOH ⁴⁾ Secar® 80, Kerneos Inc. ⁵⁾ mittlere Korngröße: 16 µm | | |

### Amin/Novolakharz-Gemisch

Die Hybridhärter der erfindungsgemäßen Beispiele 1 bis 4 setzen sich aus 22-28 Gew.-% Novolakharz der Formel (I), bezogen auf das Amin/Novolakharz-Gemisch, und den in der folgenden Tabelle aufgelisteten Aminen zusammen:

| Amin | Beispiel | | | |
|---|---|---|---|---|
| | **1** | **2** | **3** | **4** |
| DYTEK A ⁶⁾ | 20-28 Gew.-%* | 40-56 Gew.-% | 35-50 Gew.-% | 20-28 Gew.-% |
| TMD ⁷⁾ | 20-28 Gew.-%* | | | 20-28 Gew.-% |
| TETA ⁸⁾ | 10-20 Gew.-%* | 8-19 Gew.-% | 6-15 Gew.-% | 10-20 Gew.-% |
| mXDA ⁹⁾ | 4-10 Gew.-%* | 5-12 Gew.-% | 5-12 Gew.-% | |
| IPD ¹⁰⁾ | | | 5-12 Gew.-% | |
| 1,3-BAC ¹¹⁾ | | | | 5-12 Gew.-% |

| | | | | |
|---|---|---|---|---|
| * bezogen auf das Amin/Novolak-Gemisch ⁶⁾ 2-Methyl-pentandiamin; INVISTA GmbH, Deutschland ⁷⁾ Trimethylhexamethylendiamin; Vestamin® TMD; Evonik Industries, Deutschland ⁸⁾ Triethylentetramin; Huntsman, Belgien ⁹⁾ 1,3-Benzoldimethanamin; Mitsubishi Gas Chemical Company INC., Japan ¹⁰⁾ 3-Aminomethyl-3,5,5-trimethylcyclohexylamin; Vestamin® IPD; Evonik Industries, Deutschland ¹¹⁾ 1,3-Bis(aminomethyl)cyclohexan; Mitsubishi Gas Chemical Company INC., Japan | | | | |

### a) Aushärteverlauf

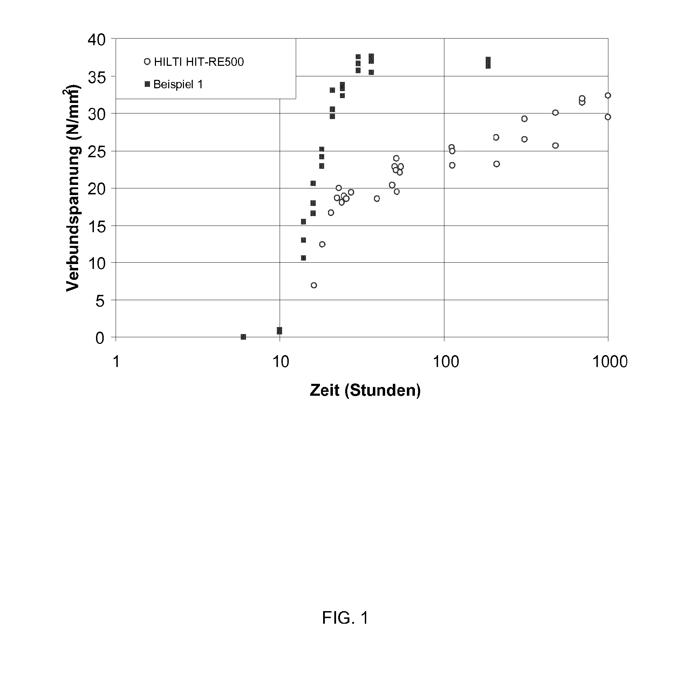

Fig. 1 zeigt den Vergleich des Aushärteverlaufs der Formulierung nach Beispiel 1 und von HILTI RE 500 anhand von Auszugsversuchen von M12x72 Gewindestangen in Beton nach verschiedenen Zeiten bei +5°C Untergrund-Temperatur. Der steilere Kurvenverlauf der erfindungsgemäßen Formulierung im direkten Vergleich mit HILTI RE 500 zeigt deutlich, dass die erfindungsgemäße Formulierung schneller aushärtet und die Aushärtung zu einem sehr frühen Zeitpunkt vollständig ist.

### b) Gelzeitbestimmung

Die Bestimmung der Gelzeit der Mörtelmassen erfolgt mit einer handelsüblichen Vorrichtung (GELNORM®-Gel Timer) bei einer Temperatur von 25°C. Hierzu werden die A- und die B-Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945. Die Gelzeit ist die Zeit, bei der ein Temperaturanstieg um 10K erreicht wird, hier von 25°C nach 35°C.

Die Ergebnisse sind in Tabelle 1 aufgeführt.

### c) Bestimmung der Lastwerte

Zur Bestimmung der Lastwerte der ausgehärteten Mörtelmassen wird eine Ankergewindestange HAS M12 verwendet, die in ein Bohrloch in Beton C20/25 mit einem Durchmesser von 14 mm und einer Bohrlochtiefe von 72 mm mit der erfindungsgemässen Zweikomponenten-Mörtelmasse bei +5°C bzw. +23°C eingedübelt wird. Die mittlere Versagenslast wird durch zentrisches Ausziehen der Ankergewindestange mit enger Abstützung unter Verwendung hochfester Ankergewindestangen ermittelt. Es werden jeweils 3 Ankergewindestangen eingedübelt und nach 24 Stunden Aushärtung ihre Lastwerte bestimmt. Die hierbei ermittelten Lastwerte (Verbundspannung) sind als Mittelwert in der nachfolgenden Tabelle 1 aufgeführt.

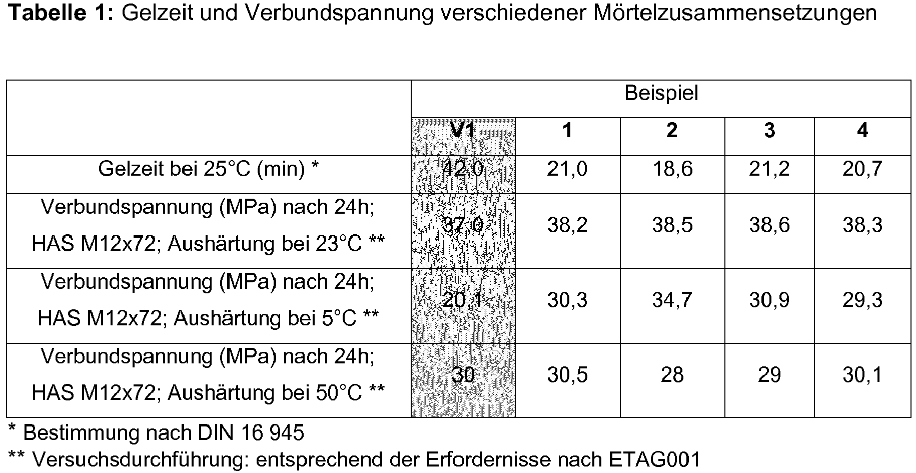

Die Gelzeiten der erfindungsgemäß verwendeten Mörtelzusammensetzungen gegenüber der Vergleichszusammensetzung konnte auf etwa die Hälfte reduziert werden.

Die Mörtelzusammensetzungen erreichten bei +23°C und +50°C Lastwerte, die im Bereich der Vergleichszusammensetzung (RE 500) liegen. Bei +5°C konnten jedoch deutlich höhere Lastwerte erreicht werden, was auf eine gute und vollständige Aushärtung der Mörtelmassen bei +5°C schließen lässt.

Aus der Tabelle wird somit ersichtlich, dass die Mörtelzusammensetzungen, die durch die erfindungsgemäße Verwendung des Novolak-Amin Hybridhärters eine wesentlich kürzere Gelzeit bei +25°C aufweisen, damit schneller aushärten, aber trotzdem Verbundspannungen ergeben, die bei mittleren (+23°C) und höheren Temperaturen (+50°C) mit denen des Vergleichsdübels (HILTI RE 500) vergleichbar sind bzw. im Tieftemperaturbereich (+5°C) darüber liegen.

## Patentansprüche

1. Verwendung eines Hybridhärters, der ein Gemisch aus
(a) mindestens einem Amin, ausgewählt unter aliphatischen, alicyclischen und aromatischen Aminen, wobei das Amin im Mittel mindestens zwei reaktive Wasserstoffatome, gebunden an ein Stickstoffatom, pro Molekül aufweist, als Härter und
(b) einem Novolakharz der allgemeinen Formel (I): 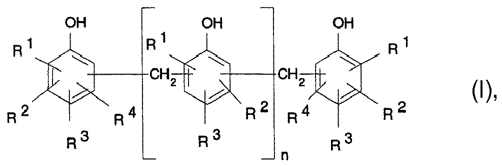 in der R¹, R², R³ und R⁴ jeweils unabhängig voneinander Wasserstoff oder ein unverzweigtes oder verzweigtes C₁-C₁₅-Alkylradikal sind und n 1 bis 12 ist, wobei das Novolakharz in einer Menge von 30 bis 45 Gew.-%, bezogen auf das Gesamtgewicht des Hybridhärters (a) und (b), enthalten ist, als Beschleuniger,
enthält, als Härter in Mehrkomponenten-Mörtelmassen auf Epoxid-Basis.

2. Verwendung nach Anspruch 1, wobei in Formel (I) R¹ bis R⁴ Wasserstoff sind, oder eines oder zwei der Radikale R¹ bis R⁴ CH₃-Radikale sind, oder eines der Radikale R¹ bis R⁴ ein *tert*-Butylradikal oder ein unverzweigtes oder verzweigtes C₈-C₁₅-Alkylradikal ist.

3. Verwendung nach Anspruch 1 oder 2, wobei der Härter ein Gemisch aus mindestens zwei Aminen, ausgewählt unter aliphatischen, alicyclischen und aromatischen Aminen enthält.

4. Verwendung nach Anspruch 3, wobei das Gemisch
(i) Alkyldiamine und aromatische Amine oder
(ii) Alkyldiamine, Polyalkylen-Polyamine und aromatische Amine enthält.

5. Verwendung nach Anspruch 4, wobei das Gemisch
(i) 2-Methyl-1,5-pentandiamin und 1,3-Benzoldimethanamin oder
(ii) Trimethylhexamethylendiamin, 2-Methyl-pentandiamin, Triethylentetramin und 1,3-Benzoldimethanamin enthält.

6. Verwendung nach Anspruch 5, wobei in dem Gemisch
(i) 28 bis 34 Gew.-% 2-Methyl-1,5-pentandiamin und 4 bis 7 Gew.-% 1,3-Benzoldimethanamin, oder
(ii) 20 bis 28 Gew.-% Trimethylhexamethylendiamin, 20 bis 28 Gew.-% 2-Methyl-pentandiamin, 10 bis 18 Gew.-% Triethylentetramin und 4 bis 10 Gew.-% 1,3-Benzoldimethanamin
enthalten sind, jeweils bezogen auf den Hybridhärter (a) und (b).

7. Verwendung nach einem der vorhergehenden Ansprüche, wobei der Hybridhärter ferner (c) mindestens eine Verbindung der allgemeinen Formel (II): 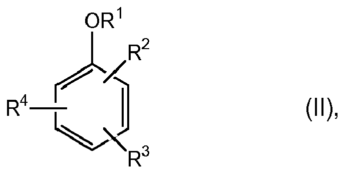 in der
R¹ Wasserstoff oder ein unverzweigtes oder verzweigtes C₁-C₁₅-Alkylradikal ist;
R² ein (CH₂)ₙNR⁵R⁶-Radikal oder ein NH(CH₂)ₙNR⁵R⁶-Radikal ist, in dem R⁵, R⁶ jeweils unabhängig voneinander ein unverzweigtes oder verzweigtes C₁-C₁₅-Alkylradikal ist und n 0 oder 1 ist;
R³ und R⁴ jeweils unabhängig voneinander Wasserstoff oder ein (CH₂)ₙNR⁷R⁸-Radikal oder ein NH(CH₂)ₙNR⁷R⁸-Radikal ist, in dem R⁷ und R⁸ jeweils unabhängig voneinander Wasserstoff oder ein unverzweigtes oder verzweigtes C₁-C₁₅-Alkylradikal ist und n 0 oder 1 ist,
als Co-Beschleuniger, enthält.

8. Verwendung nach Anspruch 7, wobei in Formel (II) R¹ Wasserstoff ist, R², R³ und R⁴ jeweils ein (CH₂)ₙNR⁷R⁸-Radikal mit n = 0 oder 1 sind und R⁷ und R⁸ Methyl oder Ethyl sind.

9. Verwendung nach Anspruch 8, wobei die Verbindung der Formel (II) tris-2,4,6-(Dimethylaminomethyl)phenol ist.

10. Verwendung einer unter Verwendung des Hybridhärters nach einem der Ansprüche 1 bis 9 hergestellten Mehrkomponenten-Mörtelmasse mit
(A) einer Harzkomponente, die als härtbare Verbindung mindestens ein Epoxidharz, das im Durchschnitt mehr als eine Epoxid-Gruppe pro Molekül enthält, und gegebenenfalls mindestens einen Reaktivverdünner umfasst; und
(B) einer Härterkomponente, die einen Hybridhärter umfasst,
wobei die Harzkomponente (A) und/oder die Härterkomponente (B) gegebenenfalls weitere Bestandteile, ausgewählt unter anorganischen und organischen Verbindungen, enthält,
für Bauzwecke, ausgenommen Beschichtungen.

11. Verwendung nach Anspruch 10, in der der Hybridhärter in einer Menge von 54 bis 84 Gew.-% enthalten ist, bezogen auf die Härterkomponente (B).

12. Verwendung nach Anspruch 10 oder 11, wobei die Härterkomponente (B) ferner einen Haftvermittler enthält.

13. Verwendung nach einem der Ansprüche 10 bis 12, wobei die härtbare Verbindung unter Diglycidylether von Bisphenol A, Diglycidylether von Bisphenol F oder Gemischen davon ausgewählt ist.

14. Verwendung nach einem der Ansprüche 10 bis 13, wobei die Harzkomponente (A) ferner mindestens einen Reaktivverdünner enthält.

15. Verwendung nach Anspruch 14, wobei der mindestens eine Reaktivverdünner unter Glycidylethern von aliphatischen, alicyclischen oder aromatischen Mono- oder Polyalkoholen, Glycidylethern mit einer Epoxid-Funktionalität von mindestens 2, Tri- oder höheren Glycidylethern oder Mischungen von zwei oder mehreren davon ausgewählt ist.

16. Verwendung nach Anspruch 14 oder 15, wobei der Reaktivverdünner in einer Menge bis zu 60 Gew.-% enthalten ist.

17. Verwendung nach einem der Ansprüche 10 bis 16, wobei die Harzkomponente (A) und/oder die Härterkomponenten (B) ferner mindestens einen anorganischen Zuschlagstoff enthält.

18. Verwendung nach Anspruch 17, wobei der mindestens eine anorganische Zuschlagstoff unter mineralischen oder mineralähnlichen Füllstoffen, Verstärkungsmitteln, Rheologiehilfsmitteln, Phlegmatisiermitteln, Thixotropiermitteln, Stabilisatoren, Dispergiermitteln, Steuerungsmitteln für die Reaktionsgeschwindigkeit und Netzmitteln ausgewählt ist.

19. Verwendung nach Anspruch 17 oder 18, wobei der mindestens eine anorganische Zuschlagstoff in einer Menge bis zu 70 Gew.-% enthalten ist.

20. Verwendung nach einem der Ansprüche 10 bis 19, für das Baukleben von Beton/Beton, Stahl/Beton oder Stahl/Stahl oder einer der genannten Materialien auf anderen mineralischen Materialien, für die strukturelle Verstärkung von Bauteilen aus Beton, Mauerwerk und anderen mineralischen Materialien, für die Armierungsanwendungen mit faserverstärkten Polymeren von Bauobjekten, für die chemische Befestigung auf Oberflächen aus Beton, Stahl oder anderen mineralischen Materialien.
